# EUROPÄISCHE PATENTSCHRIFT

(11) **EP 4 400 756 B1**
(45) Veröffentlichungstag und Bekanntmachung des Hinweises auf die Patenterteilung: **10.12.2025**
(21) Anmeldenummer: 23215312.2
(22) Anmeldetag: 04.01.2023
(51) Int. Cl.: F16L 37/32

(54) **LEITUNGSVERBINDER MIT GERINGEM STRÖMUNGSWIDERSTAND**
LOW FLOW RESISTANCE LINE CONNECTOR
CONNECTEUR DE LIGNE À FAIBLE RÉSISTANCE À L'ÉCOULEMENT

(43) Veröffentlichungstag der Anmeldung: 17.07.2024
(62) Teilanmeldung aus: 23150315.2
(73) Patentinhaber: TI Automotive (Fuldabrück) GmbH, 34277 Fuldabrück (DE)
(72) Erfinder: Röder, Michael, 34289 Zierenberg (DE); Rohde, Reiner, 34323 Malsfeld (DE); Jensen, Hans, 73265 Dettingen unter Teck (DE); Häckel, Andre, 34513 Waldeck (DE); Bube, Kay, 36277 Schenklengsfeld (DE); Barthel, Iris, 34270 Schauenburg (DE)
(74) Vertreter: Novagraaf Group

(56) Entgegenhaltungen:
- EP-B1- 0 622 578
- FR-A- 1 442 777
- FR-A1- 2 983 938
- US-B2- 7 766 039

## Beschreibung

Die Erfindung betrifft einen Leitungsverbinder zur fluidischen Kupplung mit einem komplementären Leitungsverbinder, wobei der Leitungsverbinder einen Verbinderkörper umfasst, wobei der Verbinderkörper einen Verbindungsabschnitt zur Verbindung mit einem Rohr oder mit einem Aggregat und einen Kupplungsabschnitt zur Kupplung mit einem komplementären Leitungsverbinder umfasst, wobei der Kupplungsabschnitt und der Verbindungsabschnitt über einen Innenkanal des Verbinderkörpers miteinander fluidisch verbunden sind, wobei in dem Innenkanal ein Ventil angeordnet ist, wobei das Ventil eine Ventilführung, einen axial beweglichen Ventilkörper und einen Ventilsitz umfasst, wobei die Ventilführung die Bewegungsrichtung des Ventilkörpers definiert, wobei der Leitungsverbinder so ausgebildet ist, dass der Ventilkörper in einem gesperrten Zustand des Ventils an dem Ventilsitz fluiddicht anliegt und in einem geöffneten Zustand des Ventils nicht an dem Ventilsitz anliegt.

Derartige Leitungsverbinder in Form einer Kupplungsbuchse sowie in Form eines Kupplungssteckers sind aus der FR 2 983 938 A1 bekannt, in welcher eine Vorrichtung zur Schnellverbindung zwischen zwei Teilen eines Flüssigkeitskreislaufs beschrieben ist, von denen der eine einen dichten Endstecker und der andere einen dichten komplementären Endbuchsenstecker aufweist, wobei beide Elemente zur Herstellung der Verbindung beim Öffnen oder Schließen aufweisen, die während des Kupplungsvorgangs oder umgekehrt bei ihrer Trennung nach der Entriegelung eingesetzt werden. Die Elemente bestehen aus mindestens einem axial beweglichen Verschlussmechanismus, der im Inneren einer Bohrung des Körpers oder einer Bohrung einer in diesen eingesetzten Hülse angeordnet ist, und weisen eine Achse mit einem ein Ventil bildenden Kopf auf, der mit einem festen Sitz der Bohrung und einer Rückstellfeder zusammenwirkt. Der Mechanismus in der Ruhestellung geschlossen und wird bei der Kupplung mit einem zweiten Verbinder über ein festes oder bewegliches axiales Element des letzteren zum Öffnen beansprucht.

Weitere Leitungsverbinder werden beispielsweise in der GB 868,631 A oder DE 10 2004 026 209 B4 beschrieben, wobei die Leitungsverbinder jeweils ein Ventil aufweisen. Durch das Zusammenstecken der beiden Leitungsverbinder zu einer Kupplungsanordnung wird das in dem jeweiligen Leitungsverbinder befindliche Ventil durch das jeweils andere Ventil weiter in das Innere des jeweiligen Leitungsverbinders gedrückt, wodurch beide Ventile gleichzeitig geöffnet werden. Bei einem Lösen der Kupplungsanordnung werden die beiden Ventile mit Hilfe jeweils eines Rückstellelementes im Ventilaufbau automatisch geschlossen, so dass Fluidverluste beim Lösen der Kupplungsanordnung vermieden bzw. stark verringert werden. Die Ventile öffnen und schließen sich folglich nur in Abhängigkeit des Verbindungszustands der Kupplungsanordnung, so dass diese Ventile strömungs- bzw. fluiddruckunabhängig sind.

Die Leitungsverbinder dieses Stands der Technik weisen allerdings gegenüber Leitungsverbindern ohne Ventile den Nachteil auf, dass die Strömungswiderstände aufgrund der Ventile recht hoch sind. Der Erfindung liegt daher die Aufgabe zugrunde, einen Leitungsverbinder mit Ventil zu schaffen, der einen geringeren Strömungswiderstand aufweisen.

Diese Aufgabe wird gelöst durch einen Leitungsverbinder zur fluidischen Kupplung mit einem komplementären Leitungsverbinder, wobei der Leitungsverbinder einen Verbinderkörper umfasst, wobei der Verbinderkörper einen Verbindungsabschnitt zur Verbindung mit einem Rohr oder mit einem Aggregat und einen Kupplungsabschnitt zur Kupplung mit einem komplementären Leitungsverbinder aufweist, wobei der Kupplungsabschnitt und der Verbindungsabschnitt über einen Innenkanal des Verbinderkörpers miteinander fluidisch verbunden sind, wobei der dem Kupplungsabschnitt zugeordnete Abschnitt des Innenkanals in einem Längsschnitt der Kupplungsbuchse eine Mittenachse sowie eine axiale und eine radiale Richtung sowie eine Umlaufrichtung definiert, wobei der Kupplungsabschnitt in axial auswärtiger Richtung von einer Kupplungsöffnung abgeschlossen wird, wobei in dem Innenkanal ein Ventil angeordnet ist, wobei das Ventil eine Ventilführung, einen axial beweglichen Ventilkörper und einen Ventilsitz umfasst, wobei die Ventilführung die Bewegungsrichtung des Ventilkörpers definiert, wobei der Leitungsverbinder so ausgebildet ist, dass der Ventilkörper in einem gesperrten Zustand des Ventils an dem Ventilsitz fluiddicht anliegt und in einem geöffneten Zustand des Ventils nicht an dem Ventilsitz anliegt, dadurch gekennzeichnet, die Ventilführung in einer Führungsaufnahme des Ventilsitzes axial gleitend gelagert ist, wobei der Ventilkörper eine Aufnahme für die Führungsaufnahme aufweist.

Der Erfindung liegt zunächst die Erkenntnis zugrunde, dass die eingangs genannte Aufgabe durch zwei unterschiedliche Lösungen gelöst werden kann, wobei die beiden Lösungen auch kumulativ eingesetzt werden können.

Gemäß der ersten Lösung wird die eingangs genannte Aufgabe erfüllt, indem wenigstens eine Strömungsöffnung des Ventilsitzes von der konzentrischen Kreisform abweicht. Beispielsweise kann die Strömungsöffnung stern- oder blütenförmig ausgebildet sein, wodurch der Umfang der Strömungsöffnung gegenüber der konzentrischen Kreisform deutlich vergrößert wird. Sobald der zweckmäßigerweise komplementär zum Ventilsitz bzw. zur Strömungsöffnung ausgebildete Ventilkörper sich von dem Ventilsitz löst, entsteht ein Strömungskanal im Ventil, welcher im Falle der beiden genannten Formbeispiele im Wesentlichen den Umriss eines Sterns bzw. einer Blüte hat.

Allerdings fließt praktisch nur am äußeren Rand der jeweiligen Strömungsöffnung das Fluid, weil sich dort der Ventilkörper zuerst von dem Ventilsitz löst. In der Folge ist weniger die Fläche als vielmehr der Umfang der Strömungsöffnung hinsichtlich der Flussrate bzw. des Strömungswiderstands entscheidend.

Ferner kann der Strömungswiderstand auch dadurch deutlich verringert werden, indem der Ventilsitz zwei oder mehr Strömungsöffnungen aufweist, die die Gesamtfläche des Ventilsitzes unter sich weitgehend aufteilen. Denn die Summe der Umfänge der einzelnen Strömungsöffnungen ist größer als der Umfang einer einzigen, großen Strömungsöffnung. Werden beispielsweise zwei oder drei kreisförmige Strömungsöffnungen im Ventilsitz vorgesehen, so handelt es sich zwar um Kreisformen, die bezüglich der Mittenachse M jedoch nicht konzentrisch angeordnet sind. Im Ergebnis erlauben Strömungsöffnungen, die entweder nicht kreisförmig sind oder aber kreisförmige, nicht jedoch konzentrisch angeordnete Strömungsöffnungen eine Verringerung des Strömungswiderstands, wodurch die eingangs genannte Aufgabe gelöst wird.

Gemäß der zweiten Lösung wird die eingangs genannte Aufgabe erfüllt, indem die Ventilführung in einer Führungsaufnahme des Ventilsitzes axial gleitend gelagert ist. Hierdurch kann auf eine Ventilhalterung auf der axial einwärtigen Seite des Ventilkörpers verzichtet werden, in welcher die Ventilführung der bekannten Ventile gehalten bzw. gelagert ist. Diese bekannte Ventilhalterung ist ihrerseits über Streben mit einer Innenwand des Leitungsverbinders verbunden, die einen Strömungswiderstand erzeugen. Durch die Integration der Funktion der Ventilhalterung in den Ventilsitz bzw. die Lagerung/Halterung der Ventilführung in dem Ventilsitz wird eine separat ausgebildete Ventilhalterung im Innenkanal vermieden. In der Folge wird der Strömungswiderstand verringert und die eingangs genannte Aufgabe gelöst.

Der Ausdruck "axial einwärts" meint vorzugsweise die axiale Richtung von der Kupplungsöffnung des Leitungsverbinders bzw. des komplementären Leitungsverbinders weiter in den Leitungsverbinder bzw. komplementären Leitungsverbinder hinein bzw. hin zum Verbindungsabschnitt. Zweckmäßigerweise ist die Angabe "axial einwärts" bzw. "axial auswärts" jeweils auf den Leitungsverbinder bezogen, so dass die axial einwärtige Richtung des Leitungsverbinders entgegengesetzt zur axial einwärtigen Richtung des komplementären Leitungsverbinders ist.

Der Ausdruck "axial gleitend" meint vorzugsweise, dass nur ein geringes, zum axialen Gleiten erforderliches radiales Spiel vorliegt. Es ist möglich, dass die Ventilführung und der Ventilsitz so ausgebildet sind, dass eine Rotation der Ventilführung in dem Ventilsitz unterbunden ist. Dies trägt zu einer besonders zuverlässigen Dichtwirkung des Ventils bei.

Die Ventilführung ist mit Vorteil länglich ausgebildet und vorzugsweise stangenartig ausgebildet. Vorzugsweise erstreckt sich eine Längsausdehnung bzw. die längste Ausdehnung der Ventilführung in axialer Richtung. Dies erlaubt eine möglichst widerstandsarme Ausbildung des Ventils. Es ist bevorzugt, dass die Ventilführung, der Ventilkörper und/oder der Ventilsitz wenigstens axialabschnittsweise rotationssymmetrisch ausgebildet und/oder konzentrisch angeordnet ist/sind. Zweckmäßigerweise ist der Ventilsitz wenigstens axial abschnittsweise axial weiter auswärts als der Ventilkörper im offenen Zustand und/oder im geschlossenen Zustand des Ventils angeordnet. Mit Vorteil sind der Ventilsitz und/oder der Ventilkörper in radialer Richtung und/oder in axialer Richtung vollständig innerhalb des Verbinderkörpers eingehaust.

Der Ventilsitz umfasst vorzugsweise einen Ventilsitzring, wobei der Ventilsitzring weiter vorzugsweise einen äußeren Rand des Ventilsitzes bildet. Mit Vorteil ist der Ventilsitz einstückig und vorzugsweise integral, beispielsweise per Spritzguss, hergestellt. Zweckmäßigerweise umfasst der Ventilsitz die Führungsaufnahme zur Lagerung der Ventilführung. Zweckmäßigerweise umfasst der Ventilsitz wenigstens einen Ventilsitzsteg, der die Führungsaufnahme mit dem Ventilsitzring verbindet.

Der wenigstens eine Ventilsitzsteg verjüngt sich vorteilhafterweise in einem Längsschnitt des Leitungsverbinders in axial einwärtiger und/oder axial auswärtiger Richtung, vorzugsweise in axial einwärtiger und in axial auswärtiger Richtung. Mit Vorteil weist der wenigstens eine Ventilsitzsteg in einem Längsschnitt des Leitungsverbinders in axialer Richtung einen mittleren Abschnitt auf, wobei der mittlere Abschnitt in radialer Richtung weiter ausgedehnt ist als ein axial auswärtiger Abschnitt und/oder ein axial einwärtiger Abschnitt des Ventilsitzsteges. Hierdurch wird die Fluidströmung optimiert. Vorteilhafterweise ist eine Kontur bzw. ein Querschnitt des wenigstens einen Ventilsitzsteges in einem Längsschnitt des Leitungsverbinders gerundet, vorzugsweise in wenigstens eine axiale Richtung tropfenförmig und besonders vorzugsweise in beide axiale Richtungen tropfenförmig ausgebildet.

Gemäß einer sehr bevorzugten Ausführungsform weist der Ventilsitz wenigstens zwei oder drei - vorzugsweise lediglich zwei - Strömungsöffnungen mit jeweils vollständig umlaufenden Rändern auf. Es ist bevorzugt, dass die Strömungsöffnungen wenigstens zwei bzw. drei Ventilsitzstege ausbilden. Der Ventilsitz weist mit Vorteil wenigstens zwei bzw. drei Ventilsitzstege auf. Vorteilhafterweise verbinden die Ventilsitzstege eine/die Führungsaufnahme mit dem Ventilsitzring.

Gemäß einer sehr bevorzugten Ausführungsform weicht die wenigstens eine oder lediglich eine Strömungsöffnung von der Kreisform ab. Die wenigstens eine Strömungsöffnung kann beispielsweise blüten- oder sternförmig ausgestaltet sein. Es ist möglich, dass wenigstens ein Ventilsitzsteg von dem Ventilsitzring ausgehend weiter nach radial innen verläuft, wobei vorzugsweise ein radial inneres Ende des Ventilsitzstegs der Ventilsitzstege eine/die Führungsaufnahme bildet.

Es ist besonders bevorzugt, dass die wenigstens eine Strömungsöffnung - bevorzugt die beiden Strömungsöffnungen - in einem Querschnitt bzw. in einer Vorderansicht länglich und gebogen ist/sind. Dies erlaubt die Vergrößerung der gesamten Umfangslänge der Strömungsöffnungen und trägt gleichzeitig zur Vermeidung einer separaten Ventilhalterung bei. Vorteilhafterweise ist die wenigstens eine Strömungsöffnung bzw. sind die beiden Strömungsöffnungen C-förmig ausgebildet. Es ist sehr bevorzugt, dass die beiden Strömungsöffnungen in einer Vorderansicht aufgrund der gebogenen bzw. C-förmigen Kontur die Führungsaufnahme wenigstens teilweise umschließen.

Besonders vorzugsweise umfasst der Ventilkörper eine Dichtfläche, welche im geschlossenen Zustand des Ventils fluiddicht am Ventilsitz bzw. an der wenigstens einen Strömungsöffnung anliegt. Vorteilhafterweise greift ein Rand der wenigstens einen Strömungsöffnung in axialer Richtung im geschlossenen Zustand des Ventils in die Dichtfläche ein. Dies trägt zur Verringerung des Strömungswiderstands bzw. zur Dichtwirkung des Ventils bei. Es ist bevorzugt, dass der Ventilkörper bzw. die Dichtfläche im geöffneten Zustand des Ventils eine Ventilsitzaufnahme aufweist. Die Ventilsitzaufnahme umfasst vorzugsweise wenigstens eine Stegaufnahme zur Aufnahme eines Ventilsitzsteges und/oder eine Aufnahme für die Führungsaufnahme des Ventilsitzes.

Es ist besonders bevorzugt, dass ein axial auswärtiges Ende der Ventilführung den Ventilsitz bzw. die Führungsaufnahme in axial auswärtiger Richtung überragt. Es ist sehr vorteilhaft, dass der Ventilkörper mit seiner der Kupplungsöffnung zugeordneten bzw. axial auswärtigen Seite mit der Ventilführung verbunden ist. Dies trägt zur Vermeidung einer separaten Ventilhalterung bei. Vorzugsweise ist ein axial einwärtiges Ende der Ventilführung an den Ventilkörper angeschlossen. Es ist von Vorteil, dass das axial auswärtige Ende der Ventilführung in einem geschlossenen Zustand des Ventils den Ventilsitz axial weiter in auswärtiger Richtung überragt im Vergleich zu einem geschlossenen Zustand des Ventils.

Gemäß einer sehr bevorzugten Ausführungsform ist der Ventilsitz separat vom Verbinderkörper hergestellt und in dem Verbinderkörper bzw. in einem Ventilsitzabschnitt des Verbinderkörpers fixiert. Dies erlaubt die integrale Ausbildung des Verbinderkörpers, so dass es insbesondere nicht eines aus zwei oder mehr Teilen hergestellten Verbinderkörpers bedarf. Der Ventilsitz mag kraft-, form- und/oder stoffschlüssig in dem Verbinderkörper fixiert sein, wobei der Ventilsitz mit Vorteil kraft- und/oder formschlüssig in den Verbinderkörper fixiert ist. Der Ventilsitz kann insbesondere in den Verbinderkörper bzw. in den Ventilsitzabschnitt eingeklemmt sein, wobei die Klemmkraft vorzugsweise in radialer Richtung wirkt. Vorteilhafterweise ist der Ventilsitzring des Ventilsitzes an seiner radialen Außenseite komplementär zu einem Ventilsitzabschnitt des Verbinderkörpers ausgebildet und in den Ventilsitzabschnitt eingesetzt. Der Ventilsitzabschnitt kann eine radial nach innen ragenden Schulter zur Definition einer axialen Position des Ventilsitzes innerhalb des Verbinderkörpers aufweisen.

Besonders vorzugsweise umfasst das Ventil ein Rückstellelement, wobei das Rückstellelement vorzugsweise axial auswärts vom Ventilsitz bzw. von der Führungsaufnahme angeordnet ist. Es ist zweckmäßig, dass das Rückstellelement auf den Ventilkörper - vorzugsweise in Richtung des Ventilsitzes - eine Kraft ausübt, so dass das Rückstellelement im geschlossenen Zustand des Ventils den Ventilkörper gegen den Ventilsitz drückt. Es ist sehr bevorzugt, dass das Rückstellelement bzw. ein einwärtiges Ende des Rückstellelements an einer axialen Außenseite des Ventilsitzes bzw. einer der Führungsaufnahme gelagert ist. Das Rückstellelement ist mit Vorteil als elastisches Element, insbesondere als elastisches Federelement und vorzugsweise als Schraubenfeder ausgestaltet. Es ist sehr bevorzugt, dass das Rückstellelement die Ventilführung wenigstens axialabschnittsweise in radialer Richtung umschließt. Vorteilhafterweise ist ein axial auswärtiges Ende des Rückstellelements an einem axial auswärtigen Ende der Ventilführung gelagert. Das axial auswärtige Ende der Ventilführung umfasst mit Vorteil einen nach radial außen ragenden Vorsprung, welcher vorzugsweise als Flansch ausgebildet ist. Das Rückstellelement ist vorzugsweise zwischen dem radial nach außen ragenden Vorsprung am axial auswärtigen Ende der Ventilführung und dem Ventilsitz bzw. der Führungsaufnahme angeordnet.

Mit Vorteil umfasst der Leitungsverbinder einen Ventilsitzhalter zur Sicherung des Ventilsitzes in dem Verbinderkörper. Der Ventilsitzhalter mag ringförmig und bevorzugt kreisringförmig ausgebildet sein. Der Ventilsitzhalter ist vorzugsweise axial auswärts relativ zum Ventilsitz angeordnet. Der Ventilsitzhalter kann in dem Verbinderkörper kraft-, form- und/oder stoffschlüssig in dem Verbinderkörper fixiert und insbesondere in den Verbinderkörper geklemmt sein. Mit Vorteil unterbindet der Ventilsitzhalter ein axiales Spiel des Ventilsitzes in dem Verbinderkörper.

Gemäß einer bevorzugten Ausführungsform ist der Verbinderkörper einstückig und vorzugsweise integral ausgebildet. Dies erlaubt eine besonders kostengünstige Herstellung. Der Verbinderkörper kann zweiteilig ausgestaltet sein und beispielsweise zwei per Form- und/oder Kraftschluss miteinander verbundene Teile umfassen. Es ist möglich, dass ein einstückiger Verbinderkörper zwei separat hergestellte Teile aufweist, die mittels Stoffschluss, insbesondere per Schweißung, miteinander verbunden wurden.

Zweckmäßigerweise umfasst der Ventilkörper, der Ventilsitz, der Ventilhalter und/oder der Verbinderkörper einen Kunststoff bzw. überwiegend einen Kunststoff. Das Rückstellelement weist vorzugsweise ein Metall und weiter vorzugsweise überwiegend ein Metall auf. Vorteilhafterweise ist das Material des Ventilkörpers bzw. der Dichtfläche des Ventilkörpers weicher als das Material des Ventilsitzes und/oder der Ventilführung. Die Ventilführung kann ein Metall und/oder einen Kunststoff aufweisen bzw. überwiegend aufweisen.

Es ist sehr bevorzugt, dass im geöffneten Zustand des Ventils und/oder im geschlossenen Zustand des Ventils der Ventilkörper den Verbinderkörper nicht berührt. Dies trägt zu einem strömungswiderstandsarmen Ventil bei. Vorteilhafterweise berührt der Ventilkörper zu keinem Zeitpunkt zwischen dem geöffneten und dem geschlossenen Zustand des Ventils den Verbinderkörper. Vorzugsweise wird der Verbinderkörper ausschließlich über die Ventilführung während des Übergangs von dem geschlossenen in den geöffneten Zustand und umgekehrt geführt. Vorzugsweise umschließt der Ventilkörper die Ventilführung wenigstens axial abschnittsweise in radialer Richtung mindestens teilweise und vorzugsweise über einen vollständigen Umlauf hinweg.

Gemäß einer sehr bevorzugten Ausführungsform ist der Ventilkörper im geschlossenen Zustand des Ventils - vorzugsweise lediglich - über den Ventilsitz mit dem Verbinderkörper verbunden. Vorzugsweise ist ein axial einwärtiges Ende des Ventils bzw. Ventilkörpers frei von Elementen, die das Ventil bzw. den Ventilkörper mit dem Verbinderkörper verbinden. Es ist sehr bevorzugt, dass der Leitungsverbinder neben dem Ventilsitz keine weitere Ventilhalterung aufweist. Dies verringert den Strömungswiderstand und verringert die Anzahl der Teile.

Besonders vorzugsweise ist das Ventil bzw. der Leitungsverbinder so ausgebildet, dass das Ventil in Abhängigkeit von einer Verbindung des Leitungsverbinders mit einem komplementären Leitungsverbinder öffnet bzw. schließt. Mit Vorteil ist das Ventil bzw. der Leitungsverbinder so ausgestaltet, dass sich das Ventil bei vollständiger Verbindung mit einem komplementären Leitungsverbinder, insbesondere im Falle eines Einrastens des komplementären Leitungsverbinders im Leitungverbinder, öffnet. Vorteilhafterweise ist das Ventil bzw. der Leitungsverbinder so ausgebildet, dass das Ventil unabhängig von einer Strömungsrichtung und/oder eines Fluiddrucks im Innenkanal öffnet bzw. schließt.

Das Ventil ist zweckmäßigerweise so ausgebildet, dass ein radial weiter innenliegender Bereich des Ventilkörpers im geöffneten Zustand axial ebenso weit vom Ventilsitz entfernt ist wie ein radial weiter außenliegender Bereich des Ventilkörpers. Dies ist ein wichtiger Unterschied zu flexiblen, beispielsweise membranartigen Ventilkörpern, bei denen radial äußere Bereiche durch das Fluid weiter vom Ventilsitz weggedrückt werden als radial weiter innenliegende Bereiche.

Vorzugsweise umfasst der Ventilkörper im Längsschnitt einen sich in axial auswärtiger Richtung radial aufweitenden Abschnitt und einen sich in axial auswärtiger Richtung radial verjüngenden Abschnitt. Der sich verjüngende Abschnitt mag axial weiter auswärts angeordnet sein als der sich aufweitende Abschnitt. Dies trägt zur Verringerung des Strömungswiderstands bei.

Der Leitungsverbinder kann eine Kupplungsbuchse oder ein Kupplungsstecker sein. Die Kupplungsbuchse ist zweckmäßigerweise so ausgebildet, dass ein komplementärer Leitungsverbinder in Form eines Kupplungssteckers in die Kupplungsbuchse fluidisch dicht einsteckbar ist. Der Kupplungsstecker ist zweckmäßigerweise so ausgestaltet, dass der Kupplungsstecker in einen komplementären Leitungsverbinder in Form einer Kupplungsbuchse fluidisch dicht einsteckbar ist. Mit Vorteil umfasst die Kupplungsbuchse einen Rückhalter zum - vorzugsweise reversiblen - Halten des Kupplungssteckers in der Kupplungsbuchse. Der Rückhalter geht vorteilhafterweise einen Formschluss mit dem Kupplungsstecker ein. Der Rückhalter ist vorzugsweise als Rastelement ausgebildet, so dass der Kupplungsstecker bei Einführung in die Kupplungsbuchse eine - vorzugsweise reversible - Rastverbindung mit dem Rückhalter eingeht. Der Rückhalter kann beispielsweise U-förmig oder umlaufend ausgestaltet sein. Der Rückhalter mag ein Metall und/oder einen Kunststoff umfassen.

Eine Fluidleitung kann wenigstens einen erfindungsgemäßen Leitungsverbinder und ein Rohr umfassen. Die Fluidleitung mag zwei Leitungsverbinder umfassen, wobei zweckmäßigerweise jeweils ein Leitungsverbinder an einem der beiden Enden des Rohres befestigt ist. Das Rohr ist vorzugsweise an dem Verbindungsabschnitt des Leitungsverbinders kraft-, form- und/oder stoffschlüssig angeschlossen. Das Rohr kann insbesondere per Kraft- und Formschluss, beispielsweise über einen Presssitz, vorzugsweise mittels Aufschieben auf den Verbindungsabschnitt, mit dem Leitungsverbinder verbunden sein. Gemäß einer bevorzugten Ausführungsform ist das Rohr mittels Stoffschluss und vorzugsweise mittels Schweißung und insbesondere Laserschweißung an dem Leitungsverbinder bzw. dem Verbindungsabschnitt befestigt. Besonders vorzugsweise ist das Rohr in den Verbindungsabschnitt hineingesteckt und mittels Reibschweißen oder Laserschweißen - vorzugsweise Laserschweißen - mit dem Verbindungabschnitt bzw. dem Leitungsverbinder verbunden.

Die eingangs genannte Aufgabe wird gelöst durch eine Verwendung eines erfindungsgemäßen Leitungsverbinders in einem Kraftfahrzeug, insbesondere in einem Landfahrzeug bzw. Straßenfahrzeug und vorzugsweise in einem Personenkraftwagen oder einem Lastkraftwagen, wobei die Verwendung in einem Elektrofahrzeug bevorzugt ist.

Nachfolgend wird die Erfindung anhand von mehreren Ausführungsbeispielen mithilfe mehrerer Figuren dargestellt. Es zeigen
- Fig.1: eine perspektivische Ansicht einer Kupplungsanordnung mit einem erfindungsgemäßen Leitungsverbinder und einem erfindungsgemäßen komplementären Leitungsverbinder,
- Fig. 2: einen Längsschnitt durch die Kupplungsanordnung aus Fig. 1 in einem verbundenen Zustand und mit geöffneten Ventilen,
- Fig. 3: einen Längsschnitt durch die Kupplungsanordnung der Fig. 1 und 2 in einem nur teilweise verbundenen Zustand mit geschlossenen Ventilen,
- Fig. 4A: eine perspektivische Ansicht eines erfindungsgemäßen Ventilsitzes und eines erfindungsgemäßen Ventilkörpers der Ventile aus den Figuren 2 und 3 in Explosionsdarstellung,
- Fig. 4B: eine Vorderansicht des Ventilsitzes und des Ventilkörpers aus Fig. 4A,
- Fig. 5: eine Vorderansicht eines Ventilsitzes eines zweiten Ausführungsbeispiels der Erfindung,
- Fig. 6: eine Vorderansicht eines erfindungsgemäßen Ventilsitzes eines dritten Ausführungsbeispiels der Erfindung und
- Fig. 7: eine Vorderansicht eines erfindungsgemäßen Ventilsitzes eines vierten Ausführungsbeispiels der Erfindung.

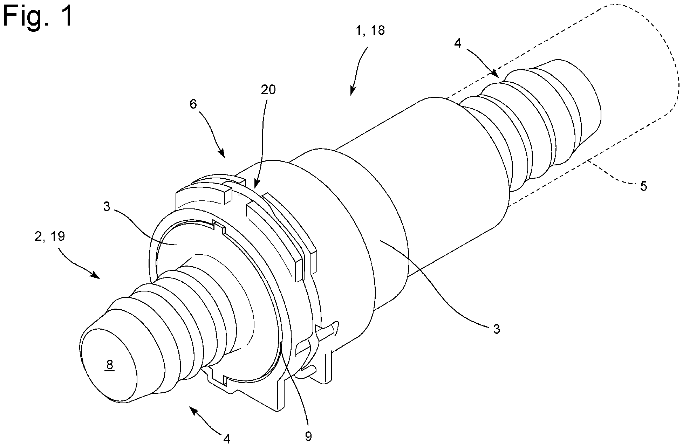

In Fig. 1 ist eine Kupplungsanordnung 1, 2 eines ersten Ausführungsbeispiels der Erfindung gezeigt. Die Kupplungsanordnung 1, 2 umfasst einen ersten Leitungsverbinder 1 in der bevorzugten Form einer Kupplungsbuchse 18 sowie einen zweiten bzw. komplementären Leitungsverbinder 2 in der bevorzugten Form eines Kupplungssteckers 19. Sowohl der Leitungsverbinder 1 als auch der komplementäre Leitungsverbinder 2 sind in diesem Ausführungsbeispiel als VDA-Leitungsverbinder ausgebildet. Der Leitungsverbinder 1 und/oder der komplementäre Leitungsverbinder 2 weist einen Verbinderkörper 3 auf. Der Leitungsverbinder 1 dieses Ausführungsbeispiels umfasst vorzugsweise einen Rückhalter 20.

Der Rückhalter 20 dieses Ausführungsbeispiels ist als Drahtbügel ausgebildet, welcher U-förmig bzw. im Wesentlichen U-förmig ausgestaltet ist. Zwei U-Schenkel des Rückhalters 20 ragen vorzugsweise in ein Inneres des Verbinderkörpers 3 hinein und verrasten dort vorzugsweise in bzw. an einem - an sich bekannten und in den Figuren aufgrund der gewählten Perspektiven nicht ersichtlichen - Rastelement des komplementären Leitungsverbinders 2. Das Rastelement mag als Nut oder Schulter ausgebildet sein. Es ist sehr bevorzugt, dass bei einem Einführen des komplementären Leitungsverbinders 2 in den Leitungsverbinder 1 der komplementäre Leitungsverbinder 2 die U-Schenkel des Rückhalters 20 auseinanderspreizt, bis das Rastelement die U-Schenkel erreicht hat und diese dort einrasten.

Der Leitungsverbinder 1 und/oder der komplementäre Leitungsverbinder 2 umfasst einen Verbindungsabschnitt 4 zur Verbindung mit einem Rohr 5 oder mit einem Aggregat. Das Aggregat kann beispielsweise ein Tank, eine Pumpe, eine Düse oder dergleichen sein. Der Verbindungsabschnitt 4 kann kraft-, stoff- und/oder formschlüssig mit dem Rohr 5 bzw. dem Aggregat verbunden sein. Es ist möglich, dass der Verbindungsabschnitt 4 einstückig und vorzugsweise integral mit dem Aggregat verbunden ist. Insbesondere ist es möglich, dass der Leitungsverbinder 1 bzw. der Leitungsverbinder 2 über den Verbindungsabschnitt 4 an das Aggregat - insbesondere per Spritzguss - angeformt ist.

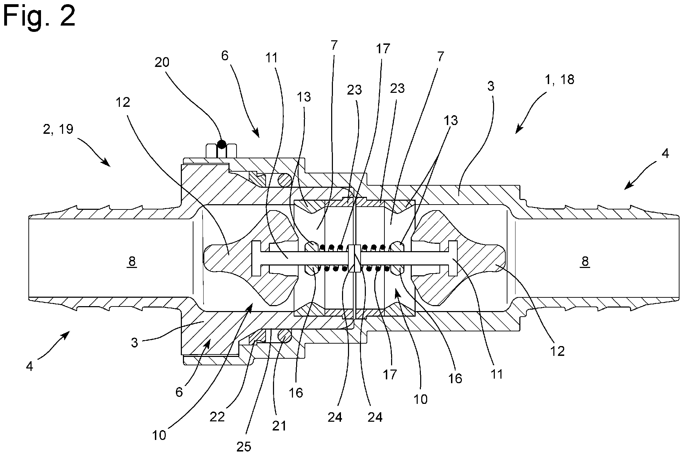

Der Leitungsverbinder 1 umfasst einen Kupplungsabschnitt 6 zur Kupplung mit dem komplementären Leitungsverbinder 2. Zweckmäßigerweise umfasst der komplementäre Leitungsverbinder 2 einen Kupplungsabschnitt 6 (s. Fig. 2), welcher zur Kupplung mit dem Leitungsverbinder 1 ausgebildet ist. Der Begriff "Kupplungsabschnitt" meinte vorzugsweise den jeweils mit dem anderen Leitungsverbinder 1, 2 überlappenden Abschnitt in axialer Richtung. Zweckmäßigerweise sind der Verbindungsabschnitt 4 und/oder der Kupplungsabschnitt 6 Bestandteil - vorzugweise einstückiger und besonders vorzugsweise integraler Bestandteil - des Verbinderkörpers 3 des Leitungsverbinders 1 bzw. des komplementären Leitungsverbinders 2. Es ist bevorzugt, dass der Verbinderkörper 3 des Leitungsverbinders 1 bzw. das komplementären Leitungsverbinders 2 einstückig und vorzugsweise integral ausgebildet ist.

In Fig. 2 ist erkennbar, dass der Verbindungsabschnitt 4 des Leitungsverbinders 1 bzw. des komplementären Leitungsverbinders 2 über einen Innenkanal 8 des Leitungsverbinders 1 bzw. des komplementären Leitungsverbinders 2 mit dem Kupplungsabschnitt 6 des Leitungsverbinders 1 bzw. komplementären Leitungsverbinders 2 fluidisch verbunden ist. Zweckmäßigerweise umfasst der Leitungsverbinder 1 eine Dichtung 21, 22, welche vorzugsweise einen Dichtungsring 21 und weiter vorzugsweise einen Dichtungsringhalter 22 umfasst. Mithilfe der Dichtungen 21, 22 werden die Innenkanäle 8 des Leitungsverbinders 1 und des komplementären Leitungsverbinders 2 fluidisch dicht miteinander verbunden.

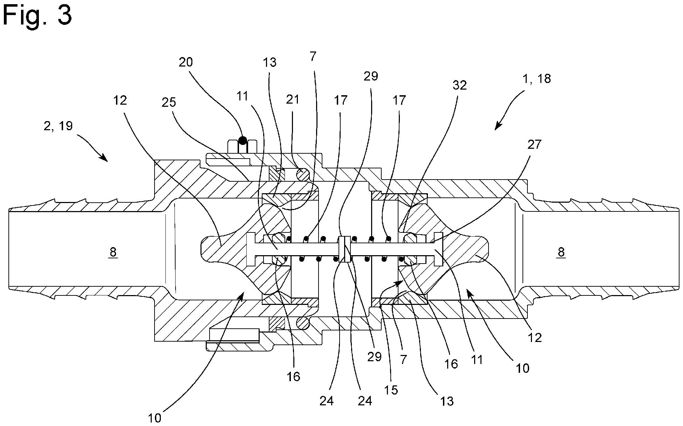

Der komplementäre Leitungsverbinder 2 dieses Ausführungsbeispiels umfasst in seinem Kupplungsabschnitt 6 eine Kuppelfläche 25, welche zweckmäßigerweise zylindrisch komplementär zum Kupplungsabschnitt 6 des Leitungsverbinders 1 ausgebildet ist und insbesondere einen fluidisch dichten Kraft- und Formschluss mit dem Dichtungsring 21 eingeht, s. Fig. 3. Mit Vorteil ist die Kupplungsanordnung 1, 2 bzw. der Leitungsverbinder 1 bzw der Leitungsverbinder 2 so ausgebildet, dass die Kuppelfläche 25 den Dichtungsring 21 berührt, bevor das Ventil 10 bzw. die Ventile 10 geöffnet werden, vgl. Figuren 2 und 3.

Bevorzugt wird ein Ventil 10 in dem Leitungsverbinder 1 und/oder ein Ventil 10 in dem komplementären Leitungsverbinder 2 durch die vollständige Einführung des komplementären Leitungsverbinders 2 in den Leitungsverbinder 1 geöffnet. In diesem Ausführungsbeispiel sind das Ventil 10 des Leitungsverbinders 1 und das Ventil 10 des komplementären Leitungsverbinders 2 identisch aufgebaut, so dass nachfolgend nur der Aufbau des Ventils 10 des Leitungsverbinders 1 beschrieben wird.

Das Ventil 10 des Leitungsverbinders 1 umfasst eine Ventilführung 11, einen Ventilkörper 12 sowie einen Ventilsitz 13. Das Ventil 10 umfasst vorzugsweise ein Rückstellelement 17, welches in diesem Ausführungsbeispiel als Spiralfeder ausgebildet ist. Mit Vorteil weist das Ventil 10 einen Ventilsitzhalter 23 auf, welcher den Ventilsitz 13 in dem Leitungsverbinder 1 bzw. in dem Verbinderkörper 3 hält bzw. fixiert. Der Ventilsitzhalter 23 mag etwa ringförmig ausgebildet, axial auswärts relativ zum Ventilsitz 13 angeordnet und/oder in dem Verbinderkörper 3 kraft-, stoff- und/oder formschlüssig befestigt sein. Der Ventilsitz 13 ist zweckmäßigerweise in einen Ventilsitzabschnitt des Verbinderkörpers 3 angeordnet. Der Ventilsitzabschnitt mag in einem Längsschnitt eine nach radial innen ragende Schulter aufweisen, welche eine axiale Position des Ventilsitzes definiert.

Die Ventilführung 11 dieses Ausführungsbeispiels ist länglich ausgebildet und umfasst vorzugsweise an ihrem axial auswärtigen Ende eine Druckfläche 24. Die Druckfläche 24 ist einem/dem komplementären Leitungsverbinder 2 zugewandt und bevorzugt dazu ausgebildet, eine Druckfläche 24 einer Ventilführung 11 des Ventils 10 des komplementären Leitungsverbinders 2 zu berühren. Mit Vorteil ist die Druckfläche 24 ein Bestandteil bzw. eine axiale Außenseite der Ventilführung 11 bzw. eines Vorsprungs oder eines Druckkragens 29 der Ventilführung 11.

In Fig. 3 ist der komplementäre Leitungsverbinder 2 soweit in den Leitungsverbinder 1 eingeführt, dass sich die beiden Druckflächen 24 gerade eben berühren, so dass die auf die Rückstellelemente 17 einwirkenden Kompressionskräfte gleich Null sind. Durch ein weiteres Einführen des komplementären Leitungsverbinders 2 in den Leitungsverbinder 1 werden die beiden Rückstellelemente 17 aufgrund zunehmender Kompressionskräfte immer weiter gestaucht, wodurch in dem jeweiligen Rückstellelement 17 eine zunehmend größere Rückstellenergie gespeichert wird. Die Rückstellelemente 17 stützen sich jeweils mit einem axial auswärtigen Ende vorzugsweise an einem jeweiligen Druckkragen 29 ab, welcher vorzugsweise zugleich die jeweilige Druckfläche 24 bildet.

Auf der axial einwärtigen Seite des jeweiligen Rückstellelementes 17 in den Figuren 2 und 3 wird das Rückstellelement 17 durch den Ventilsitz 13 abgestützt. Es ist bevorzugt, dass der Ventilsitz 13 eine Führungsaufnahme 16 aufweist, in welcher die Ventilführung 11 axial beweglich gelagert ist. Es ist bevorzugt, dass das Rückstellelement 17 in axial auswärtiger Richtung gegen den Druckkragen 29 der Ventilführung 11 drückt, so dass mit Vorteil der Ventilkörper 12 in axial auswärtiger Richtung gegen den Ventilsitz 13 gezogen wird. Im geöffneten bzw. nicht verbundenen Zustand der Kupplungsanordnung 1, 2 liegt dadurch zweckmäßigerweise der Ventilkörper 12 an dem Ventilsitz 13 an, so dass das Ventil 10 geschlossen ist, s. Fig. 3.

Aufgrund des weiteren Einführens ausgehend von Fig. 3 wird das Rückstellelement 17 gestaucht, wodurch die Ventilführung 11 und der Ventilkörper 12 dieses Ausführungsbeispiels weiter nach axial einwärts bewegt werden und dadurch der Ventilkörper 12 von dem Ventilsitz 13 gelöst wird, s. Fig. 2. Dabei verrastet der komplementäre Leitungsverbinder 2 am Rückhalter 20, wodurch nahezu gleichzeitig eine mechanische Sicherung sowie eine fluidische Öffnung stattfinden. Umgekehrt wird beim Lösen der Kupplungsanordnung 1, 2 eine fluidisches Schließen beider Ventile erreicht, so dass der Flüssigkeitsverlust beim Lösen der Kupplungsanordnung 1, 2 minimiert wird.

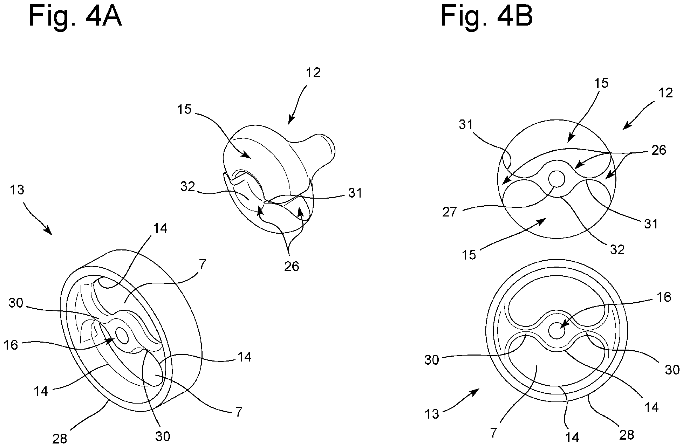

In Fig. 4A sind der Ventilsitz 13 sowie der dazugehörige, komplementär ausgestaltete Ventilkörper 12 perspektivisch und in Explosionsdarstellung zueinander abgebildet. Der Ventilsitz 13 dieses Ausführungsbeispiels umfasst zwei Strömungsöffnungen 7, welche vorzugsweise länglich ausgebildet und/oder bevorzugt gebogen und/oder insbesondere C-förmig ausgestaltet sind. Die Strömungsöffnungen 7 werden jeweils von einem Rand 14 begrenzt. In Fig. 4B sind der Ventilsitz 13 und der Ventilkörper 12 aus Fig. 4A jeweils in einer Vorderansicht abgebildet.

Zwischen den beiden Strömungsöffnungen 7 aus Fig. 4A, 4B ist vorzugsweise die Führungsaufnahme 16 angeordnet, welche die jeweilige Ventilführung 11 in axialer Richtung beweglich lagert. Vorzugsweise ist die Führungsaufnahme 16 über zwei Ventilsitzstege 30 mit dem restlichen Körper des Ventilsitzes 13 verbunden. Der Ventilsitz 13 umfasst mit Vorteil einen Ventilsitzrand 28, welcher zweckmäßigerweise ringförmig und insbesondere kreisringförmig ausgebildet ist. Der Ventilsitzrand 28 ist vorzugsweise über die Ventilsitzstege 30 mit der Führungsaufnahme 16 verbunden. Die Ventilsitzstege 30 dieses Ausführungsbeispiels sind gemäß Fig. 4A strömungsoptimiert und verjüngen sich in axial einwärtiger und auch in axial auswärtiger Richtung.

Die Führungsaufnahme 16 des Ausführungsbeispiels gemäß Fig. 4A, 4B ist eine Durchgangsbohrung, welche vorzugsweise konzentrisch zur Mittenachse M angeordnet ist. Mit Vorteil erlaubt die Führungsaufnahme 16 eine Bewegung der Ventilführung 11 in axialer und in Umfangsrichtung, nicht aber - mit Ausnahme eines geringen Spiels - in radialer Richtung. Es ist möglich, dass die Führungsaufnahme 16 bzw. die Ventilführung 11 bzw. das Ventil 10 so ausgebildet ist/sind, dass die Bewegungsrichtung in Umfangsrichtung der Ventilführung 11 in der Führungsaufnahme 16 unterbunden wird. Hierdurch wird gewährleistet, dass der Ventilkörper 12 stets passgenau bzw. in der korrekten Ausrichtung axial auf den Ventilsitz 13 hin bewegt wird.

Der Ventilkörper 12 des Ausführungsbeispiels nach Fig. 4A, 4B umfasst ein Elastomer bzw. besteht aus einem Elastomer. Der Ventilsitz 13 weist vorzugsweise einen Kunststoff, insbesondere einen Kunststoff ohne einen Elastomeranteil, auf. Mit Vorteil ist das Material des Ventilkörpers 12 weicher als das Material des Ventilsitzes 13, so dass mit Vorteil eine besonders gute Abdichtung zwischen dem Ventilsitz 13 und dem Ventilkörper 12 erzielt wird. Es ist in anderen, hier nicht dargestellten Ausführungsbeispielen möglich, dass der Ventilkörper mit einer Elastomerschicht beschichtet ist.

Der Ventilkörper 12 umfasst zweckmäßigerweise eine Dichtfläche 15, welche vorzugsweise in einem axial auswärtigen Bereich des Ventilkörpers 12 angeordnet ist, s. Fig. 4A, 4B. Die Dichtfläche 15 ist bevorzugt diejenige Fläche des Ventilkörpers 12, welche die Strömungsöffnungen 7 des Ventilsitzes 13 abdichtet. Aufgrund der zwei Strömungsöffnungen 7 des Ventilsitzes 13 gemäß dem Ausführungsbeispiel nach Fig. 4A umfasst die Dichtfläche 15 des Ventilkörpers 12 zwei Abschnitte, wobei zweckmäßigerweise jeder der beiden Abschnitte jeweils einer der beiden Strömungsöffnungen 7 zugeordnet ist.

In einem axial auswärtigen Bereich umfasst der Ventilkörper 12 gemäß Fig. 4A, 4B vorzugsweise eine Ventilsitzaufnahme 26, in welche der Ventilsitz 13 im Falle des geschlossenen Ventils 10 eingreift. Die Ventilsitzaufnahme 26 umfasst vorzugsweise eine Ventilführungsaufnahme 27 und, vorzugsweise, zwei Stegaufnahmen 31. Der Ventilkörper 12 mag eine Aufnahme 32 für die Führungsaufnahme 16 aufweisen. Wie insbesondere aus den Fig. 2 und 3 erkennbar ist, fallen bevorzugt die Ventilführungsaufnahme 27 und die Aufnahme 32 für die Führungsaufnahme 16 teilweise zusammen. Dabei ist die Aufnahme 32 für die Führungsaufnahme 16 des Ventilsitzes 13 innerhalb des Ventilkörpers 12 mit Vorteil axial weiter auswärts angeordnet als die Ventilführungsaufnahme 27 des Ventilkörpers 12, s. Fig. 2, 3.

Die Ventilführungsaufnahme 27 erfüllt die Funktion der Befestigung des Ventilkörpers 12 an der Ventilführung 11. Demgegenüber erfüllt die Aufnahme 32 für die Führungsaufnahme 16 die Aufgabe, den axialen Überlapp zwischen dem Ventilkörper 12 und dem Ventilsitz 13 zu vergrößern, so dass die Abdichtung zwischen dem Ventilkörper 12 und dem Ventilsitz 13 erleichtert wird. Insbesondere ermöglicht die Aufnahme 32 eine besonders strömungsgünstige Formgebung des Ventilkörpers 12. So ist aus den Längsschnitten der Fig. 2 und 3 erkennbar, dass sich die Dichtfläche 15 bzw. die beiden Abschnitte der Dichtfläche 15 ausgehend von der Aufnahme 32 in axial einwärtiger Richtung radial aufweitet bzw. aufweiten. Hierdurch wird erreicht, dass das Fluid nicht auf eine praktisch senkrechte Wand trifft, so dass Strömungsturbulenzen verringert und der Strömungswiderstand möglichst gering gehalten wird. In axial weiter einwärtiger Richtung und damit axial hinter der Dichtfläche verjüngt sich der Ventilkörper 12 vorzugsweise und wird mit Vorteil an seinem axial einwärtigen Ende gerundet abgeschlossen. Durch die Formgebung des Ventilkörpers 12 wird insgesamt ein möglichst widerstandsarmer Strömungsverlauf innerhalb der Kupplungsanordnung 1, 2 geschaffen.

Insbesondere mit Blick auf Fig. 4B lässt sich das Strömungsverhalten des Ventils 10 gut erläutern. Im geschlossenen Zustand des Ventils 10 liegt die Dichtfläche 15 bzw. die beiden Abschnitte der Dichtfläche 15 in fluidisch abdichtender Weise in den beiden Strömungsöffnungen 7 des Ventilsitzes 13. Umgekehrt sitzen die Führungsaufnahme 16 sowie die Ventilsitzstege 30 des Ventilsitzes 13 in der Ventilsitzaufnahme 26 des Ventilkörpers 12. In dem Moment des Lösens der Dichtfläche 15 von der Strömungsöffnung 7 fließt das Fluid entlang des Umfangs der Strömungsöffnung 7 durch die Strömungsöffnung 7. Somit entspricht die aktive Strömungsfläche im ersten Moment der Öffnung praktisch der Umfangslinie der C-Form der beiden Strömungsöffnungen 7 aus Fig. 4B. Wird der Ventilkörper 12 ein kleines Stück weiter nach axial einwärts verschoben, so verbreitert sich die aktive Strömungsfläche, so dass die aktive Strömungsfläche nicht mehr einer dünnen Linie, sondern vielmehr einer dicken Linie entlang des Umfangs der beiden Strömungsöffnungen 7 entspricht. Insbesondere findet eine Strömung in einen mittleren Bereich der beiden Strömungsöffnungen 7 in Fig. 4B kaum statt, da die Strömung vor allem am Rand 14 der Strömungsöffnungen 7 vorliegt. Die inneren Bereiche der Strömungsöffnungen 7 in fluidischer Hinsicht praktisch zu vernachlässigen. Da die Umfangslänge der beiden Strömungsöffnungen 7 deutlich größer ist als die Umfangslänge einer einzigen kreisrunden und hier nicht abgebildeten Strömungsöffnung, hat die kreisrunde Strömungsöffnung eine deutlich geringere Umfangslänge und damit auch einen deutlichen größeren Strömungswiderstand.

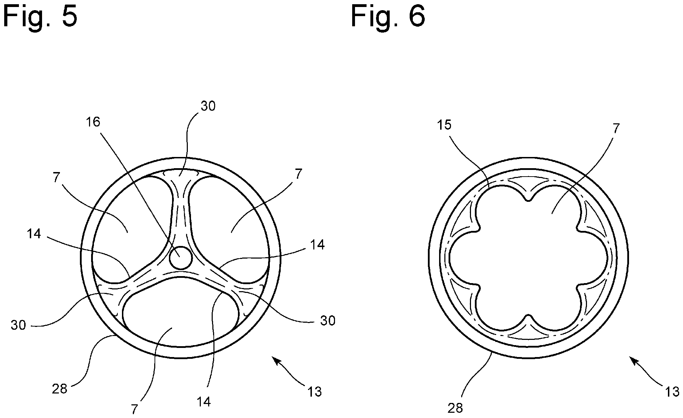

In Fig. 5 ist ein zweites Ausführungsbeispiel eines Ventilsitzes 13 in einer Vorderansicht gezeigt. Der Ventilkörper 12 dieses Ausführungsbeispiels wird nicht gezeigt, da er komplementär zum Ventilsitz 13 ausgebildet ist und im Übrigen die Formgebung des Ventilkörpers 12 gemäß dem Ausführungsbeispiel der Fig. 4A und 4B aufweist. Der Ventilsitz 13 des zweiten Ausführungsbeispiels umfasst drei Strömungsöffnungen 7, welche gleich groß und gleich geformt sein können. Mit Vorteil umfasst der Ventilsitz 13 des Ausführungsbeispiels nach Fig. 5 eine Führungsaufnahme 16, welche vorzugsweise konzentrisch zur Mittenachse M angeordnet ist und die Ventilführung 11 in axialer Richtung beweglich lagert. Die drei Strömungsöffnungen 7 nach Fig. 5 werden zweckmäßigerweise voneinander jeweils durch einen Ventilsitzsteg 30 getrennt, wobei die Ventilsitzstege 30 vorteilhafterweise sich in einem mittleren Bereich in einer Vorderansicht des Ventilsitzes 13 vereinigen und die Führungsaufnahme 16 ausbilden. Im Übrigen mag der Ventilsitzrand 28 des zweiten Ausführungsbeispiels identisch zum ersten Ausführungsbeispiel ausgestaltet sein.

In Fig. 6 ist ein drittes Ausführungsbeispiel des Ventilsitzes 13 gezeigt, wobei der Ventilsitzrand 28 wiederum identisch zu denjenigen der beiden vorherigen Ausführungsbeispiele sein mag. Der Ventilsitz 13 des dritten Ausführungsbeispiels umfasst lediglich eine Strömungsöffnung 7, die von der Kreisform abweicht und eine wellen- oder blütenförmige Kontur aufweisen mag. Durch die wellen- oder blütenförmige Kontur wird die Umfangslänge des Rands 14 der Strömungsöffnung 7 vergrößert, wodurch der Strömungswiderstand gegenüber einer entsprechenden idealen Kreisform verringert wird.

In dem in Fig. 6 gezeigten Ausführungsbeispiel umfasst der Ventilsitz 13 keine Führungsaufnahme. In der Folge ist der in Fig. 6 nicht gezeigte Ventilkörper 12 grundlegend anders ausgebildet im Vergleich zu den Ventilkörper 12 des ersten und zweiten Ausgangsbeispiels. Es ist beispielsweise möglich, dass der Ventilkörper 12 des dritten Ausführungsbeispiels eine axial einwärts angeordnete Ventilführung aufweist, welche an einer noch weiter axial einwärts angeordneten Ventilhalterung gelagert wird, s beispielsweise GB 868,631. So zeigt das dritte Ausführungsbeispiel gemäß Fig. 6, dass der Gedanke des Abweichens von der Kreisform auch auf herkömmlich gelagerte bzw. gehaltene Ventile anwendbar ist.

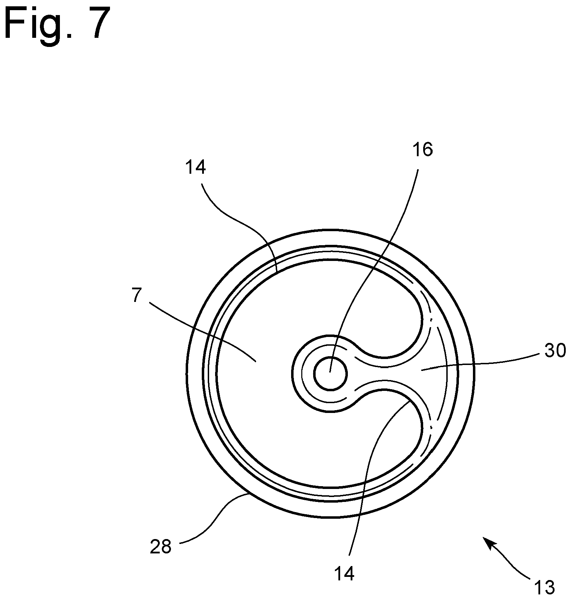

Das vierte Ausführungsbeispiel in Fig. 7 veranschaulicht, dass ein Ventilsitz 13 möglich ist, welcher lediglich eine Strömungsöffnung 7 und gleichzeitig eine Führungsaufnahme 16 aufweist. In diesem Ausführungsbeispiel hält ein entsprechend dick ausgebildeter Ventilsitzsteg 30 die Führungsaufnahme 16, welche in die einzige Strömungsöffnung 7 hineinragt. Durch den Rand 14 im Bereich des Ventilsitzstegs 13 wird die aktive Strömungsfläche gegenüber einer Strömungsöffnung mit einer reinen Kreisform deutlich vergrößert, so dass auch das in Fig. 7 gezeigte Ausführungsbeispiel eine Verringerung des Strömungswiderstands gegenüber herkömmlichen Ventilen bewirkt.

**Bezugszeichenliste**

| | |
|---|---|
| 1 | Leitungsverbinder |
| 2 | komplementärer Leitungsverbinder |
| 3 | Verbinderkörper |
| 4 | Verbindungsabschnitt |
| 5 | Rohr |
| 6 | Kupplungsabschnitt |
| 7 | Strömungsöffnung |
| 8 | Innenkanal |
| 9 | Kupplungsöffnung |
| 10 | Ventil |
| 11 | Ventilführung |
| 12 | Ventilkörper |
| 13 | Ventilsitz |
| 14 | Rand von 7 |
| 15 | Dichtfläche von 12 |
| 16 | Führungsaufnahme von 13 |
| 17 | Rückstellelement |
| 18 | Kupplungsbuchse |
| 19 | Kupplungsstecker |
| 20 | Rückhalter |
| 21 | Dichtungsring |
| 22 | Dichtungshalter |
| 23 | Ventilsitzhalter |
| 24 | Druckfläche von 11 |
| 25 | Kuppelfläche von 2, 19 |
| 26 | Ventilsitzaufnahme von 12 |
| 27 | Ventilführungsaufnahme von 12 |
| 28 | Ventilsitzrand |
| 29 | Druckkragen von 11 |
| 30 | Ventilsitzsteg von 13 |
| 31 | Stegaufnahme von 12 |
| 32 | Aufnahme für 16 von 12 |

## Patentansprüche

1. Leitungsverbinder (1) zur fluidischen Kupplung mit einem komplementären Leitungsverbinder (2), wobei der Leitungsverbinder (1) einen Verbinderkörper (3) umfasst, wobei der Verbinderkörper (3) einen Verbindungsabschnitt (4) zur Verbindung mit einem Rohr (5) oder mit einem Aggregat und einen Kupplungsabschnitt (6) zur Kupplung mit einem komplementären Leitungsverbinder (2) aufweist,
wobei der Kupplungsabschnitt (6) und der Verbindungsabschnitt (4) über einen Innenkanal (8) des Verbinderkörpers (3) miteinander fluidisch verbunden sind, wobei der dem Kupplungsabschnitt (6) zugeordnete Abschnitt des Innenkanals (8) in einem Längsschnitt der Kupplungsbuchse (1) eine Mittenachse (M) sowie eine axiale und eine radiale Richtung sowie eine Umlaufrichtung definiert, wobei der Kupplungsabschnitt (6) in axial auswärtiger Richtung von einer Kupplungsöffnung (9) abgeschlossen wird,
wobei in dem Innenkanal (8) ein Ventil (10) angeordnet ist, wobei das Ventil (10) eine Ventilführung (11), einen axial beweglichen Ventilkörper (12) und einen Ventilsitz (13) umfasst, wobei die Ventilführung (11) die Bewegungsrichtung des Ventilkörpers (12) definiert, wobei der Leitungsverbinder (1) so ausgebildet ist, dass der Ventilkörper (12) in einem gesperrten Zustand des Ventils (10) an dem Ventilsitz (13) fluiddicht anliegt und in einem geöffneten Zustand des Ventils (10) nicht an dem Ventilsitz (13) anliegt,
wobei die Ventilführung (11) in einer Führungsaufnahme (16) des Ventilsitzes (13) axial gleitend gelagert ist,
**dadurch gekennzeichnet, dass** der Ventilkörper (12) eine Aufnahme (32) für die Führungsaufnahme (16) aufweist.

2. Leitungsverbinder (1) nach Anspruch 1, wobei der Ventilsitz (13) wenigstens zwei oder drei - vorzugsweise lediglich zwei - Strömungsöffnungen (7) mit jeweils vollständig umlaufenden Rändern (14) aufweist.

3. Leitungsverbinder (1) nach Anspruch 1 oder 2, wobei die wenigstens eine oder lediglich eine Strömungsöffnung (7) von der Kreisform abweicht.

4. Leitungsverbinder (1) nach einem der Ansprüche 1 bis 3, wobei die wenigstens eine Strömungsöffnung (7) in einem Querschnitt bzw. in einer Vorderansicht länglich und gebogen ist.

5. Leitungsverbinder (1) nach einem der Ansprüche 1 bis 4, wobei der Ventilkörper (12) eine Dichtfläche (15) aufweist, welche im geschlossenen Zustand des Ventils (10) fluiddicht am Ventilsitz (13) bzw. an der wenigstens einen Strömungsöffnung (7) anliegt.

6. Leitungsverbinder (1) nach einem der Ansprüche 1 bis 5, wobei ein axial auswärtiges Ende der Ventilführung (11) den Ventilsitz (13) bzw. die Führungsaufnahme (16) in axial auswärtiger Richtung überragt.

7. Leitungsverbinder (1) nach einem der Ansprüche 1 bis 6, wobei der Ventilsitz (13) separat vom Verbinderkörper (3) hergestellt und in dem Verbinderkörper (3) bzw. in einem Ventilsitzabschnitt des Verbinderkörpers (3) fixiert ist.

8. Leitungsverbinder (1) nach einem der Ansprüche 1 bis 7, wobei das Ventil (10) ein Rückstellelement (17) umfasst, wobei das Rückstellelement (17) vorzugsweise axial auswärts vom Ventilsitz (13) bzw. von der Führungsaufnahme (16) angeordnet ist.

9. Leitungsverbinder (1) nach einem der Ansprüche 1 bis 8, wobei der Leitungsverbinder (1) einen Ventilsitzhalter (23) zur Sicherung des Ventilsitzes (13) in dem Verbinderkörper (3) umfasst.

10. Leitungsverbinder (1) nach einem der Ansprüche 1 bis 9, wobei der Verbinderkörper (3) einstückig und vorzugsweise integral ausgebildet ist.

11. Leitungsverbinder (1) nach einem der Ansprüche 1 bis 10, wobei im geöffneten Zustand des Ventils (10) und/oder im geschlossenen Zustand des Ventils (10) der Ventilkörper (12) den Verbinderkörper (3) nicht berührt.

12. Leitungsverbinder (1) nach einem der Ansprüche 1 bis 11, wobei der Leitungsverbinder (1) so ausgebildet ist, dass das Ventil (10) in Abhängigkeit von einer Verbindung des Leitungsverbinders (1) mit einem komplementären Leitungsverbinder (2) öffnet bzw. schließt.

13. Leitungsverbinder (1) nach einem der Ansprüche 1 bis 12, wobei der Leitungsverbinder (1) eine Kupplungsbuchse (18) oder ein Kupplungsstecker (19) ist.

14. Fluidleitung, umfassend wenigstens einen Leitungsverbinder (1) nach einem der Ansprüche 1 bis 13 und ein Rohr (5).

15. Verwendung eines Leitungsverbinders (1) gemäß einem der Ansprüche 1 bis 13 oder einer Fluidleitung nach Anspruch 14, in einem Kraftfahrzeug, insbesondere in einem Landfahrzeug bzw. Straßenfahrzeug, und vorzugsweise in einem Personenkraftwagen oder einem Lastkraftwagen, wobei die Verwendung in einem Elektrofahrzeug bevorzugt ist.

## Claims

1. Line connector (1) for fluidic coupling to a complementary line connector (2), the line connector (1) comprising a connector body (3), the connector body (3) having a connecting portion (4) for connection to a pipe (5) or to an aggregate and a coupling portion (6) for coupling to a complementary line connector (2),
the coupling portion (6) and the connecting portion (4) being fluidically interconnected via an inner channel (8) of the connector body (3), the portion of the inner channel (8) assigned to the coupling portion (6) defining a central axis (M) as well as an axial and a radial direction and a circumferential direction in a longitudinal portion of the coupling socket (1), the coupling portion (6) being closed off in the axially outward direction by a coupling opening (9),
a valve (10) being arranged in the inner channel (8), the valve (10) comprising a valve guide (11), an axially movable valve body (12) and a valve seat (13), the valve guide (11) defining the direction of movement of the valve body (12), the line connector (1) being designed such that the valve body (12) rests fluid-tight against the valve seat (13) in a locked state of the valve (10) and does not rest against the valve seat (13) in an open state of the valve (10),
the valve guide (11) being axially slidingly mounted in a guide receptacle (16) of the valve seat (13),
**characterized in that** the valve body (12) has a receptacle (32) for the guide receptacle (16).

2. Line connector (1) according to claim 1, wherein the valve seat (13) has at least two or three - preferably only two - flow openings (7) each having completely circumferential edges (14).

3. Line connector (1) according to either claim 1 or claim 2, wherein the at least one or only one flow opening (7) deviates from the circular shape.

4. Line connector (1) according to any of claims 1 to 3, wherein the at least one flow opening (7) is elongated and curved in a cross-section or in a front view.

5. Line connector (1) according to any of claims 1 to 4, wherein the valve body (12) has a sealing surface (15) which, in the closed state of the valve (10), rests fluid-tight against the valve seat (13) or against the at least one flow opening (7).

6. Line connector (1) according to any of claims 1 to 5, wherein an axially outward end of the valve guide (11) projects beyond the valve seat (13) or the guide receptacle (16) in the axially outward direction.

7. Line connector (1) according to any of claims 1 to 6, wherein the valve seat (13) is manufactured separately from the connector body (3) and is fastened in the connector body (3) or in a valve seat portion of the connector body (3).

8. Line connector (1) according to any of claims 1 to 7, wherein the valve (10) comprises a return element (17), wherein the return element (17) is preferably arranged axially outwardly from the valve seat (13) or from the guide receptacle (16).

9. Line connector (1) according to any of claims 1 to 8, wherein the line connector (1) comprises a valve seat holder (23) for securing the valve seat (13) in the connector body (3).

10. Line connector (1) according to any of claims 1 or 9, wherein the connector body (3) is formed as one piece and preferably integrally.

11. Line connector (1) according to any of claims 1 to 10, wherein, in the open state of the valve (10) and/or in the closed state of the valve (10), the valve body (12) does not touch the connector body (3).

12. Line connector (1) according to any of claims 1 to 11, wherein the line connector (1) is designed such that the valve (10) opens or closes depending on a connection of the line connector (1) to a complementary line connector (2).

13. Line connector (1) according to any of claims 1 to 12, wherein the cable connector (1) is a coupling socket (18) or a coupling plug (19).

14. Fluid line comprising at least one line connector (1) according to any of claims 1 to 13 and a pipe (5).

15. Use of a line connector (1) according to any of claims 1 to 13 or of a fluid line according to claim 14, in a motor vehicle, in particular in a land vehicle or road vehicle, and preferably in a passenger car or a truck, wherein use in an electric vehicle is preferred.

## Revendications

1. Raccord de conduite (1) permettant un accouplement fluidique avec un raccord de conduite complémentaire (2), dans lequel le raccord de conduite (1) comprend un corps de raccord (3), dans lequel le corps de raccord (3) présente une section de raccordement (4) permettant un raccordement avec un tuyau (5) ou avec une unité et une section d'accouplement (6) permettant un accouplement avec un raccord de conduite complémentaire (2),
dans lequel la section d'accouplement (6) et la section de raccordement (4) sont raccordées fluidiquement l'une à l'autre par un canal intérieur (8) du corps de raccord (3), dans lequel la section du canal intérieur (8) associée à la section d'accouplement (6) définit, dans une coupe longitudinale de la douille d'accouplement (1), un axe central (M) ainsi qu'une direction axiale et une direction radiale ainsi qu'un sens de circulation, dans lequel la section d'accouplement (6) est fermée dans la direction axialement extérieure par une ouverture d'accouplement (9),
dans lequel une soupape (10) est disposée dans le canal intérieur (8), dans lequel la soupape (10) comprend un guide de soupape (11), un corps de soupape (12) mobile axialement et un siège de soupape (13), dans lequel le guide de soupape (11) définit la direction de déplacement du corps de soupape (12), dans lequel le raccord de conduite (1) est conçu en sorte que le corps de soupape (12) s'applique de manière étanche aux fluides contre le siège de soupape (13) dans un état bloqué de la soupape (10) et ne s'applique pas contre le siège de soupape (13) dans un état ouvert de la soupape (10),
dans lequel le guide de soupape (11) est monté à coulissement axial dans un logement de guidage (16) du siège de soupape (13),
**caractérisé en ce que** le corps de soupape (12) présente un logement (32) pour le logement de guidage (16).

2. Raccord de conduite (1) selon la revendication 1, dans lequel le siège de soupape (13) présente au moins deux ou trois, de préférence seulement deux, ouvertures d'écoulement (7) comportant respectivement des bords (14) entièrement périphériques.

3. Raccord de conduite (1) selon la revendication 1 ou 2, dans lequel l'au moins une ou la seule ouverture d'écoulement (7) s'écarte de la forme circulaire.

4. Raccord de conduite (1) selon l'une des revendications 1 à 3, dans lequel l'au moins une ouverture d'écoulement (7) est allongée et courbée dans une section transversale ou une vue de face.

5. Raccord de conduite (1) selon l'une des revendications 1 à 4, dans lequel le corps de soupape (12) présente une surface d'étanchéité (15) qui, à l'état fermé de la soupape (10), s'applique de manière étanche aux fluides contre le siège de soupape (13) ou contre l'au moins une ouverture d'écoulement (7).

6. Raccord de conduite (1) selon l'une des revendications 1 à 5, dans lequel une extrémité axialement extérieure du guide de soupape (11) dépasse du siège de soupape (13) ou du logement de guidage (16) dans une direction axialement extérieure.

7. Raccord de conduite (1) selon l'une des revendications 1 à 6, dans lequel le siège de soupape (13) est fabriqué séparément du corps de raccord (3) et est fixé dans le corps de raccord (3) ou dans une section de siège de soupape du corps de raccord (3).

8. Raccord de conduite (1) selon l'une des revendications 1 à 7, dans lequel la soupape (10) comprend un élément de rappel (17), dans lequel l'élément de rappel (17) est de préférence disposé axialement à l'extérieur du siège de soupape (13) ou du logement de guidage (16).

9. Raccord de conduite (1) selon l'une des revendications 1 à 8, dans lequel le raccord de conduite (1) comprend un support de siège de soupape (23) permettant de fixer le siège de soupape (13) dans le corps de raccord (3).

10. Raccord de conduite (1) selon l'une des revendications 1 à 9, dans lequel le corps de raccord (3) est conçu d'un seul tenant et de préférence intégralement.

11. Raccord de conduite (1) selon l'une des revendications 1 à 10, dans lequel, à l'état ouvert de la soupape (10) et/ou à l'état fermé de la soupape (10), le corps de soupape (12) ne touche pas le corps de raccord (3).

12. Raccord de conduite (1) selon l'une des revendications 1 à 11, dans lequel le raccord de conduite (1) est conçu en sorte que la soupape (10) s'ouvre ou se ferme en fonction d'un raccordement du raccord de conduite (1) avec un raccord de conduite complémentaire (2).

13. Raccord de conduite (1) selon l'une des revendications 1 à 12, dans lequel le raccord de conduite (1) est une douille d'accouplement (18) ou une fiche d'accouplement (19).

14. Conduite de fluide comprenant au moins un raccord de conduite (1) selon l'une des revendications 1 à 13 et un tuyau (5).

15. Utilisation d'un raccord de conduite (1) conformément à l'une des revendications 1 à 13 ou d'une conduite de fluide selon la revendication 14, dans un véhicule automobile, en particulier dans un véhicule terrestre ou routier, et de préférence dans une voiture particulière ou un camion, dans laquelle l'utilisation dans un véhicule électrique est préférée.
